# FASCICULE DE BREVET EUROPEEN

(11) **EP 0 944 668 B1**
(45) Date de publication et mention de la délivrance du brevet: **12.06.2002**
(21) Numéro de dépôt: 97951295.1
(22) Date de dépôt: 10.12.1997
(51) Int. Cl.: C08G 77/38, C08G 77/388

(54) **PROCEDE DE PREPARATION D'HUILE SILICONE STABLE CONTENANT DES GROUPES SiH ET DES FONCTIONS HYDROSILYLABLES**
VERFAHREN ZUR HERSTELLUNG VON STABILEN SILIKONÖLEN DIE SiH-UND HYDROSILYLIERBARE GRUPPEN ENTHALTEN
METHOD FOR PREPARING STABLE SILICON FLUID CONTAINING SiH GROUPS AND FUNCTIONS CAPABLE OF HYDROSYLILATION

(30) Priorité: 11.12.1996 FR 9615519
(43) Date de publication de la demande: 29.09.1999
(73) Titulaire: RHODIA CHIMIE, 92408 Courbevoie Cédex (FR)
(72) Inventeur: BREUNIG, Stefan, F-38200 Vienne (FR); MIGNANI, Gérard, F-69008 Lyon (FR)
(86) Numéro de dépôt international: FR9702256
(87) Numéro de publication internationale: WO9825994

(56) Documents cités:
- EP-A- 0 468 305
- EP-A- 0 632 099

## Description

La présente invention concerne un nouveau procédé de préparation d'huile silicone stable contenant des groupes ≡SiH et des fonctions hydrosilylables. En particulier, l'invention a pour objet un procédé d'hydrosilylation entre des huiles silicones contenant des groupes ≡SiH et des monomères avec deux motifs hydrosilylables.

Les réactions d'huiles silicones ayant des groupes ≡SiH avec des oléfines ou des hydrocarbures acétyléniques sont très connues. Les huiles silicones sont, par exemple de formules :
- Me₃SiO-(MeHSiO)ₙ-(Me₂SiO)ₘ- SiMe₃ dans laquelle n et m sont des nombres entiers ou fractionnaires tels que 1≤ n ≤ 1000 et 0 ≤ m ≤ 1000 ;
- Me₂HSiO-(MeHSiO)ₒ-(Me₂SiO)ₚ- SiHMe₂ dans laquelle o et p sont des nombres entiers ou fractionnaires tels que 0 ≤ o ≤ 1000 et 0 ≤ p ≤ 1000.

De nombreux monomères peuvent fonctionnaliser les huiles silicones ; par exemple, on utilise comme monomères des alcènes, des styrènes, des allylalcools, des allyloxyéthers ou des allylamines.

Ces réactions sont très couramment utilisées pour la synthèse d'huiles silicones fonctionnalisées à partir d'huiles silicones contenant des groupes ≡SiH qui au cours de la réaction d'hydrosilylation sont fonctionnalisées par les monomères (voir EP-A-0468305 ou EP-A-0632099). Les huiles obtenues, ne contenant quasiment aucun motif ≡SiH, ont des applications dans des domaines très divers tels que l'antiadhérence et la lubrification.

En particulier, on peut préparer des huiles fonctionnalisées avec des monomères de 1,2-époxy-4-vinyl-cyclohexane. A titre d'application, ces huiles silicones fonctionnalisées sont ensuite réticulées thermiquement en présence d'un catalyseur acide tel que l'acide chlorhydrique ou l'acide sulfurique, ou photochimiquement en présence, par exemple, de photoamorceur cationique pour la préparation de films anti-adhérents pour papier et/ou plastiques.

Un nombre très important de compositions catalytiques est utilisé dans les réactions d'hydrosilylation. Les compositions catalytiques les plus connues contiennent des métaux tels que le platine, le rhodium, le cobalt ou le palladium. Des exemples spécifiques de telles compositions catalytiques sont les halogénures de platine et les halogénures de rhodium, par exemple H₂PtCl₆, PtCl₂, (RhCl₃,xH₂O) les complexes de platine avec des siloxanes ayant des groupes insaturés, les complexes de platine avec des oléfines et complexes cationiques de platine avec des nitriles comme ligands.

Généralement, les compositions catalytiques utilisées dans la réaction d'hydrosilylation sont des compositions catalytiques homogènes, i.e. lesdites compositions sont dissoutes dans le milieu réactionnel. L'une des plus employées est la composition catalytique de Karstedt décrite notamment dans le brevet US 3,775,452.

Toutefois, lors de la réaction d'hydrosilylation selon les procédés de l'art antérieur, on observe à différents degrés des réactions d'isomérisation au sein des monomères insaturés, ce qui nécessite de travailler en excès molaire de monomère par rapport à l'huile silicone dans le milieu réactionnel.

D'autre part, lorsque l'on souhaite préparer des huiles silicones comprenant au sein de la structure à la fois des groupes ≡SiH et des fonctions hydrosilylables, les procédés de l'art antérieur sont inapplicables et non adaptés ; les huiles silicones obtenues n'étant pas stables pour permettre leur utilisation postérieure. En particulier, lors de l'étape de dévoiatitisation, les fonctions hydrosilylables greffées sur la structure de l'huile silicone ont tendance à réagir entre elles, comme dans le cas des huiles silicones totalement fonctionnalisées, et/ou avec les groupes ≡SiH de l'huile silicone obtenue; ce qui provoque des réactions de polymérisation et de réticulation non contrôlées et se traduit par la formation de gomme et/ou de résine. Ces réactions peuvent notamment être initiées par la présence de trace des compositions catalytiques habituelles telles que les compositions catalytiques homogènes.

En outre, les huiles silicones fonctionnalisées obtenues à partir de procédés utilisant la catalyse homogène sont généralement colorées, de l'ordre de 80 à 300 hazen ; ce qui limite, de ce fait, leurs domaines envisageables d'utilisation, notamment dans le domaine de films transparents et anti-adhérents pour papier ou pour films transparents (par exemple de type polyester). Dans ces cas, l'huile silicone nécessite des étapes supplémentaires de purification pour pouvoir être utilisable après réticulation dans le domaine des films transparents ; ces étapes complémentaires rendent la mise en oeuvre industrielle onéreuse et donc peu viable économiquement.

La Demanderesse a mis au point un nouveau procédé de préparation d'huile silicone stable, contenant à la fois des groupes ≡SiH et des fonctions hydrosilylables, et qui permet de réduire de façon significative les inconvénients cités ci-dessus, notamment les réactions non contrôlées lors de l'étape de dévolatilisation.

Ce nouveau procédé de préparation d'huile silicone stable contenant des groupes ≡SiH et des fonctions hydrosilylables est effectué à partir d'une première huile silicone contenant des groupes ≡SiH et des monomères avec deux motifs hydrosilylables.

Les huiles silicones obtenues à partir du procédé selon l'invention comprennent à la fois des groupes ≡SiH et des fonctions hydrosilylables et sont stables lors de l'étape de dévolatilisation et stables au stockage ; ce qui permet d'utiliser ultérieurement les huiles silicones selon l'invention dans des applications exigeant à la fois la présence de groupes ≡SiH et des monomères hydrosilylables.

En outre, le procédé selon l'invention permet d'obtenir des huiles incolores et transparentes, avec une coloration très faible de l'ordre de 3 à 100 Hazen, sans nécessiter des étapes de décoloration et/ou purification qui sont peu viables économiquement et industriellement. Bien entendu, il est nécessaire pour cela que les monomères de départ soient incolores et transparents.

En particulier, les huiles silicones obtenues à partir du procédé de l'invention sont utilisables après réticulation dans le domaine des films et revêtements transparents et anti-adhérents pour papiers, pour verres et pour plastiques.

Ce nouveau procédé de préparation d'huile silicone stable contenant des groupes ≡SiH et des fonctions hydrosilylables à partir d'une huile de départ, appelée première huile silicone, contenant des groupes ≡SiH et des monomères avec deux motifs hydrosilylables, est défini dans les revendications et comprend les étapes suivantes :
(a) une quantité de 5 à 5000 ppm, de préférence de 10 à 100 ppm, de composition catalytique hétérogène par rapport à la masse totale des réactifs est introduite dans le milieu réactionnel ;
(b) la première huile silicone est introduite dans le milieu réactionnel ;
(c) ledit milieu réactionnel est chauffé à une température comprise entre 25°C et 200°C, et de préférence entre 50°C et 160°C ;
(d) les monomères sont ensuite introduits sur une durée comprise entre 0 et 24 h, de préférence entre 2,5 et 5 h ; le rapport molaire monomère/≡SiH de ladite huile étant compris entre 0,0001 et 1 ;
(e) l'huile silicone obtenue contenant des groupes ≡SiH et des fonctions hydrosilylables est ensuite séparée de la composition catalytique hétérogène par exemple par filtration ; et,
(f) l'huile silicone contenant des groupes ≡SiH et des fonctions hydrosilylables est finalement dévolatilisée.

L'étape (e) de séparation permet, le cas échéant, d'éliminer toute trace de turbidité de l'huile silicone fonctionnalisée obtenue. D'autre part, la composition catalytique hétérogène peut être récupérée puis réutilisée de nouveau, sans nécessiter de régénération, avec ou sans lavage, et sans que l'on note de baisse d'activité sensible de ses performances. En ce qui concerne la dévolatilisation (f), la stabilité des huiles silicones n'est pas affectée au cours de cette étape.

De plus, le procédé selon l'invention peut être effectué avantageusement en masse, ce qui signifie que la réaction entre l'huile silicone et le(s) monomère(s) s'effectue en l'absence de solvant. Toutefois, de nombreux solvants tels que le toluène, le xylène, l'octaméthyltétrasiloxane, le cyclohexane ou l'hexane peuvent être utilisés.

Les monomères utilisés peuvent être identiques et/ou différents.

Les huiles silicones de l'invention sont définis dans les revendications et ont été obtenus avec les monomères ayant pour formules :
■ (1) 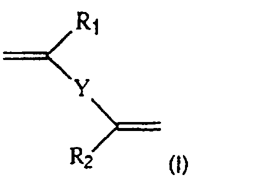 dans laquelle :
   - les symboles R₁ et R₂, identiques et/ou différents, correspondent à un radical hydrocarboné monovalent choisi parmi le radical phényle et les radicaux alkyles linéaires ou ramifiés ayant de 1 à 12 atomes de carbone, de préférence 1 atome d'hydrogène ou un radical méthyle ;
   - le symbole Y correspond à Y'-Y"-Y' où :
      ˙ le symbole Y" correspond à un radical divalent choisi parmi -(C=O)-, -(NH)-, -O-, -(C=O)-O-, -NH-(C=O)-, et une valence libre,
      ˙ les symboles Y', identiques et/ou différents, correspondent à un radical hydrocarboné divalent choisi parmi les radicaux alkyles linéaires ou ramifiés ayant de 1 à 6 atomes de carbone et une valence libre, l'un des radicaux Y' pouvant être un radical phényle ou un radical alkylaryle dont la partie alkyle linéaire ou ramifiée comprend 1 à 6 atomes de carbone.
■ (2) 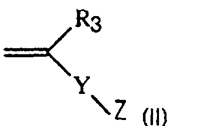 dans laquelle :
   - le symbole Z correspond à un radical monovalent -NHR₄ ou OH,
   - les symboles R₃ et R₄, identiques et/ou différents, correspondent à un radical hydrocarboné monovalent choisi parmi le radical phényle et les radicaux alkyles linéaires ou ramifiés ayant de 1 à 12 atomes de carbone ; et de préférence un atome d'hydrogène ou un radical méthyle,
   - le symbole Y correspond à Y'-Y''-Y' où:
      ˙ le symbole Y" correspond à un radical divalent choisi parmi -(C=O)-, -(NH)-, -O-, -(C=O)-O-, -NH-(C=O)- et une valence libre,
      ˙ les symboles Y', identiques et/ou différents, correspondent à un radical hydrocarboné divalent choisi parmi les radicaux alkyles linéaires ou ramifiés ayant de 1 à 6 atomes de carbone, et une valence libre, l'un des radicaux Y' pouvant être un radical phényle ou un radical alkylaryle dont la partie alkyle linéaire ou ramifiée comprend 1 à 6 atomes de carbone,
■ et (3) 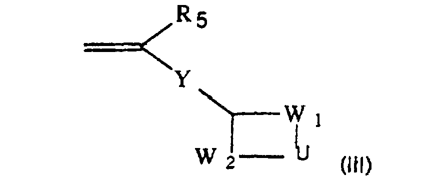 dans laquelle :
   - le symbole U correspond à un radical divalent choisi parmi -NH-, -(C=O)-, -(C=O)-NH-, et -(C=O)-O-(C=O)-,
   - le symbole R₅ correspond à un radical hydrocarboné monovalent choisi parmi le radical phényle et les radicaux alkyles linéaires ou ramifiés ayant de 1 à 12 atomes de carbone, de préférence un atome d'hydrogène ou un radical méthyle ;
   - les symboles W₁ et W₂, identiques et/ou différents, correspondent à un radical hydrocarboné divalent choisi parmi le radical phényle, les radicaux alkyles linéaires ou ramifiés ayant de 1 à 12 atomes de carbone, les radicaux alkylaryles dont la partie alkyle linéaire ou ramifiée comprend 1 à 6 atomes de carbone, et une valence libre,
   - le symbole Y correspond à Y'-Y"-Y' où :
      ˙ le symbole Y" correspond à un radical divalent choisi parmi -(C=O)-, -(NH)-, -O-, -(C=O)-O-, -NH-(C=O)-, et une valence libre,
      ˙ les symboles Y', identiques et/ou différents, correspondent à un radical hydrocarboné divalent choisi parmi les radicaux alkyles linéaires ou ramifiés ayant de 1 à 6 atomes de carbone, et une valence libre, l'un des radicaux Y' pouvant être un radical phényle ou un radical alkylaryle dont la partie alkyle linéaire ou ramifiée comprend 1 à 6 atomes de carbone.

Selon une variante préférée de mise en oeuvre du procédé selon l'invention, les monomères utilisés pour préparer les silicones selon l'invention sont les monomères de formules : 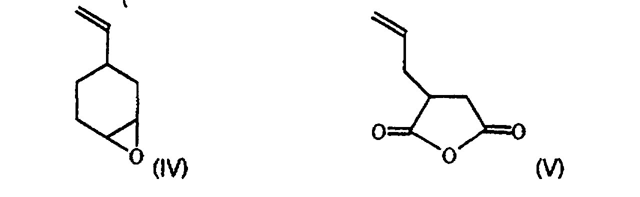 et

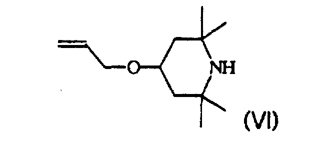

Outre les monomères cités à titre de préférence, d'autres types de monomères peuvent être utilisés. par exemple, à titre non limitatif:

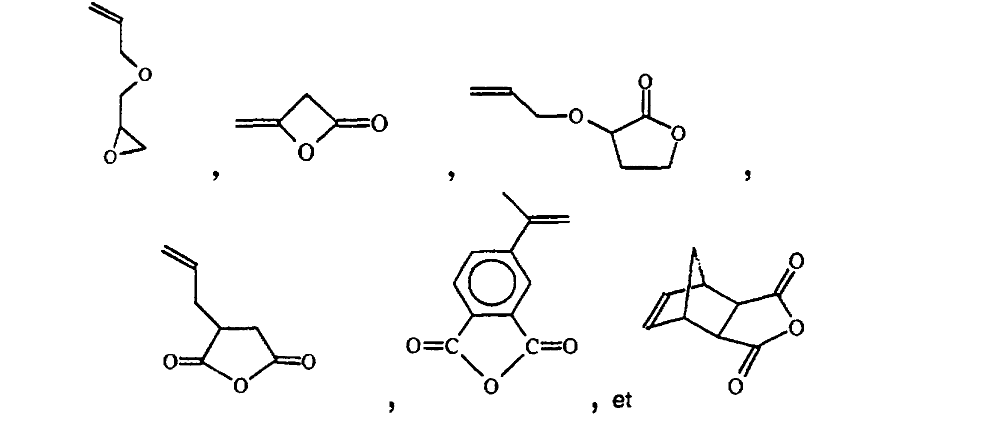

Dans le cas où les monomères contiennent une fonction hydrosilylable sous la forme d'un cycle incluant un atome d'oxygène, par exemple le 1,2-époxy-4-vinyl-cyclohexane [formule (IV)], on note que la mise en oeuvre du nouveau procédé de préparation d'huiles silicones stables contenant à la fois des groupes ≡SiH et ce type de fonctions hydrosilylables permet de réduire de façon significative les réactions d'isomérisation au sein du monomère insaturé et de plus, de réduire très sensiblement l'ouverture du cycle incluant un atome d'oxygène présent sur le monomère insaturé pendant l'hydrosilylation et lors de l'étape de dévolatilisation.

Ainsi, selon le procédé de l'invention, on obtient des huiles silicones très stables dans le temps contenant à la fois des groupes ≡SiH et des fonctions hydrosilylables (époxy, vinyl, etc.), ce qui permet de les utiliser dans des applications exigeant dans un premier temps la stabilité des huiles silicones, i.e. la non-réactivité des groupes ≡SiH et des fonctions hydrosilylables, puis dans un second temps, lors de leur utilisation, la réactivité (par exemple: réticulation) des fonctions hydrosilylables entre elles et simultanément ou non la réactivité desdites fonctions hydrosilylables avec les groupes ≡SiH.

En accord avec le procédé selon l'invention, les huiles de départ, appelées aussi premières huiles dans le cadre de l'exposé de l'invention, sont de nature diverse. Elles sont soit linéaires ou cycliques et de formules moyennes (VII) et/ou (VIII): 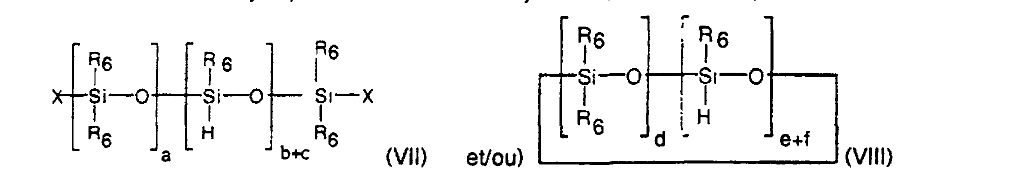 dans lesquelles :
■ les symboles R₆ sont identiques ou différents et correspondent à un radical hydrocarboné monovalent choisi parmi le radical phényle et les radicaux alkyles linéaires ou ramifiés ayant de 1 à 6 atomes de carbone ;
■ les symboles X sont identiques ou différents et correspondent à un radical monovalent choisi parmi R₆, un atome d'hydrogène, un radical méthoxy, et un radical éthoxy ;
■ a, b et c sont des nombres entiers ou fractionnaires tels que :
   - 0 < a ≤ 1000, de préférence 0 < a ≤ 100,
   - 0 ≤ b+c ≤ 200, de préférence 1 < b+c ≤ 100, et au moins un des deux X correspondant au radical hydrogène si b+c = 0,
   - 1 < a+b+c ≤ 1000, de préférence 1 < a+b+c ≤ 100 ;
■ d, e et f sont des nombres entiers ou fractionnaires tels que :
   - 0 < d < 10, de préférence 0 < d < 5
   - 1 < e+f < 10, de préférence 1 < e+f < 5.

Les huiles silicones obtenues sont respectivement les huiles silicones de formule (IX) et (X): 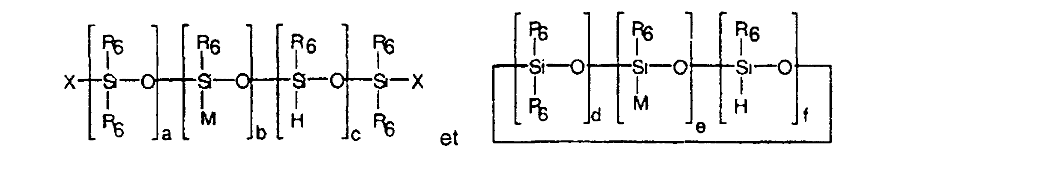 dans lesquelles :
■ les symboles R₆, identiques ou différents, ont les mêmes significations que précédemment,
■ les symboles X, identiques ou différents, correspondent à M et/ou ont les mêmes significations que précédemment et au moins un des deux X correspond à M si b = 0,
■ les symboles M, identiques ou différents, représentent des motifs hydrosilylables qui correspondent aux monomères ci-dessus décrits.
■ a, b, c, d, e et f ont les mêmes significations que précédemment décrites et :
   - 0 ≤ b ≤ 200,
   - 1 < e < 9.

Dans le cadre de l'invention, différents types de compositions catalytiques hétérogènes sont utilisables. En effet, la composition catalytique hétérogène utilisée comprend au moins un métal choisi parmi le groupe constitué de cobalt, rhodium, ruthénium, platine et nickel déposé sur un support inerte, le métal étant de préférence le platine. Le support inerte est sélectionné parmi le groupe constitué de noir de carbone, charbon, alumine, silice, silicate et sulfate de baryum, le support inerte étant de préférence le noir de carbone. Avantageusement, la quantité de métal de la composition catalytique est comprise entre 0,1% et 5% par rapport au poids du support inerte. En outre cette quantité de métal de la composition catalytique est telle qu'elle soit comprise entre 1 et 1000 ppm par rapport au poids de l'huile silicone.

A titre d'exemples non limitatifs de compositions catalytiques, on peut utiliser du platine sur noir de carbone ou charbon tel que la composition catalytique contenant 2,5% de platine en poids déposé sur le support CECA 2S développé par la société CECA, la composition catalytique SCAT 20 (1% de Pt) de la société Engelhard ou la composition catalytique 88 231 (1% Pt) de la société Heraeus. Dans ce cas, le platine peut être déposé sur ce type de support par dépôt d'acide chlcroplatinique suivi d'une neutralisation et d'une réduction. De même, l'utilisation de platine sur alumine de préférence de type α tel que la composition catalytique CAL 101 (0,3% de Pt, support SCS9 constitué de α-alumine) commercialisée par la société Procatalyse ou la composition catalytique 88 823 de la société Heraeus (0,5% de Pt sur α-alumine) donne de bons résultats. De plus, d'autres compositions catalytiques de la société Engelhard sont appropriées pour être mises en oeuvre dans le procédé selon l'invention : le catalyseur 8006 (5% Rh/charbon noir) ; le catalyseur 7025 (3% Pt/charbon noir) et le catalyseur 40968 (1% Pt/charbon granulaire).

Le procédé selon l'invention peut être mis en oeuvre selon diverses variantes. Notamment, il est possible d'utiliser une première mise en oeuvre dans laquelle l'ensemble des réactifs et de la composition catalytique sont mélangés dans le milieu réactionnel (type "batch"), A titre de seconde mise en oeuvre du procédé selon l'invention, celui-ci peut être en continu avec un lit fixe de composition catalytique hétérogène sur ou à travers lequel passent l'huile silicone à fonctionnaliser et le(s) monomère(s). Ce type de mise en oeuvre est particulièrement avantageux dans le cas où la taille des grains du support inerte de la composition catalytique est supérieure à 100 µm.

### EXEMPLES

Les exemples ci-dessous illustrent la préparation d'huiles silicones fonctionnalisées obtenues selon le procédé de la présente invention.

Selon l'huile silicone de départ, le schéma réactionnel est le suivant : 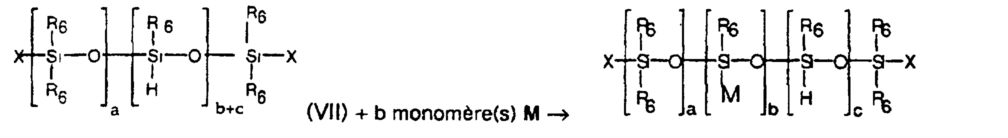 ou

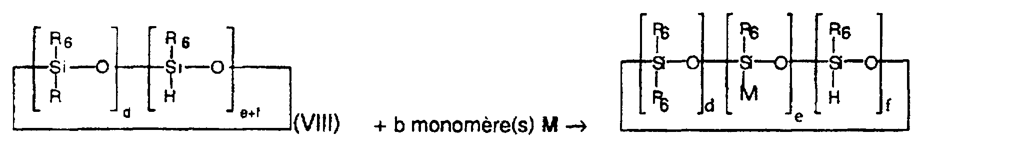

Les exemples 1, 2 et 5 concernent la synthèse d'huiles silicones fonctionnalisées par des monomères **M** de 1,2-époxy-4-vinyl-cyclohexane [formule (IV) ci-dessus] ou d'allyloxypiperidine [formule (VI) ci-dessus] avec une huile silicone de formule (XI) dont le nombre de milliéquivalents en fonction ≡SiH est de 119 pour 100 g d'huile. Le schéma réactionnel est le suivant :

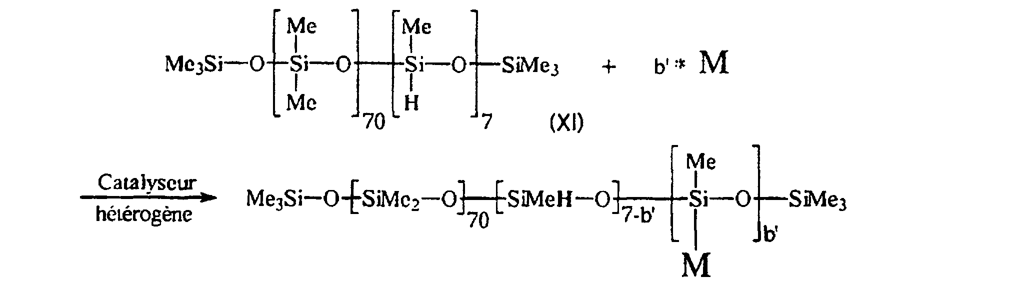

Les exemples 3, 4 et 6 concernent la synthèse d'huiles silicones fonctionnalisées par des monomères M de 1,2-époxy-4-vinyl-cyclohexane [formule (IV) ci-dessus] ou d'allyloxypiperidine [formule (VI) ci-dessus] avec une huile silicone de formule (XII) dont le nombre de milliéquivalents en fonction ≡SiH est de 724 pour 100g. Le schéma réactionnel est le suivant :

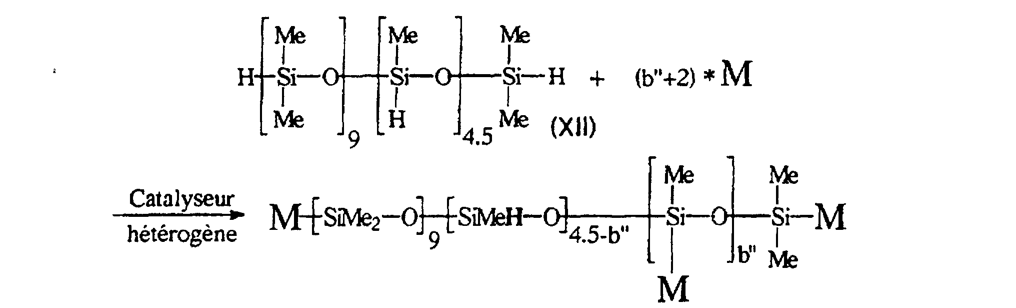

Les exemples 1 à 3 concernent des préparations selon l'art antérieur et les exemples 4 à 6 concernent des préparations en accord avec l'objet de notre invention.

La viscosité des huiles fonctionnalisées avec du 1,2-époxy-4-vinyl-cyclohexane, obtenues en accord avec notre procédé, est de l'ordre de 200 à 290 mPa.s ; cette viscosité est inférieure à celle des huiles obtenues par les procédés de l'art antérieur ; ce qui traduit notamment l'absence d'ouverture des cycles contenant un atome d'oxygène et donc l'absence de réactions de polymérisation, y compris pendant la dévolatilisation, due à l'ouverture de ces cycles. En outre, le rapport taux d'époxy dosé / taux d'époxy théorique est plus élevé pour les huiles préparées en accord avec le procédé selon notre invention.

Le dosage des ≡SiH présents sur les huiles fonctionnalisées obtenues est mesuré par gazométrie. On mesure la quantité de H₂ dégagé lors de la réaction entre l'huile silicone fonctionnalisée obtenue et le 1-butanol en présence d'hydroxyde de potassium comme catalyseur (2 g de KOH dans 50 ml de 1-butanol).

La coloration des huiles fonctionnalisées obtenues est mesurée à l'aide d'un appareil "liquid-tester LTM1" de Dr. Lange utilisant deux rayons pour la mesure en transmission.

La turbidité des huiles fonctionnalisées obtenues est mesurée à l'aide d'un turbidimètre de Hack par dispersion de lumière (mesure par ratio).

La teneur en platine des huiles fonctionnalisées obtenues est mesurée par ICP-MS.

La viscosité des huiles fonctionnalisées obtenues est mesurée à l'aide d'un appareil Brookfield selon la méthode dynamique (par cisaillement).

Le dosage des époxy sur les huiles fonctionnalisées obtenues est mesuré à l'aide d'un appareil potentiométrique type 716 DMS Titrino de Metrohin selon la méthode de

### i.M. Kolthoff et P.J. Elving ("Trease on Analytical Chemistry", part II, vol. 14, p. 288).

### Exemple 1

Dans un tricol de 100 ml équipé d'un agitateur vertical, d'un réfrigérant, d'un thermomètre et d'un septum, 4,84 µl de composition catalytique homogène de Karstedt à 11,6% de Pt (10,0 ppm de Pt dans le milieu) et 52g (61,88meq) d'huile de formule (XI) ont été introduits sous argon.

Ce mélange est chauffé à 90°C. Puis, on coule sur une durée de 1h, 4,13 g (33.28 mmol, b' = 3,5) de 1,2-époxy-4-vinyl-cyclohexane.

En fin de coulée le taux de transformation en ≡SiH est de 49,7%.

On récupère une huile fonctionnalisée, après dévolatilisation à 90°C pendant 1 h, ayant une viscosité de 1096 mPa.s.

La coloration de l'huile est de 163 hazen et la teneur en platine est de 11,6 ppm.

Le rapport taux d'époxy dosé/taux d'époxy théorique est de 0,84.

### Exemple 2

Dans un tricol de 100 ml équipé d'un agitateur vertical, d'un réfrigérant, d'un thermomètre et d'un septum, 9,68 µl de composition catalytique homogène de Karstedt à 11,6% de Pt (20,0 ppm de Pt dans le milieu) et 52g (61,88 mmol) d'huile de formule (XI) ont été introduits sous argon.

Ce mélange est chauffé à 90°C. Puis on coule sur une durée de 1 h, 4,13 g (33.28 mmol, b'= 3,5) de 1,2-époxy-4-vinyl-cyclohexane.

En fin de coulée le taux de transformation en ≡SiH est de 50,9%.

On continue à chauffer pendant 3 h.

L'huile fonctionnalisée obtenue est réticulée et se présente sous forme solide.

### Exemple 3

Dans un tricol de 250 ml équipé d'un agitateur vertical, d'un réfrigérant, d'un thermomètre et d'un septum, 18,62 µl de composition catalytique homogène de Karstedt à 11,6% de Pt (20,0 ppm de Pt dans le milieu) et 63 g (456,1 meq) d'huile de formule (XII) ont été introduits sous argon.

Ce mélange est chauffé à 110°C. Puis on coule sur une durée de 1h, 45.0 g (228.1 mmol, b"=1,25) d'allyloxypiperidine.

En fin de coulée le taux de transformation en ≡SiH est de 51,1%.

On récupère l'huile fonctionnalisée après dévolatilisation à 120°C pendant 1 h.

La coloration de l'huile est de 966 hazen et la teneur en platine est de 11,6 ppm.

### Exemple 4

Dans un tricol de 500 ml, équipé d'un agitateur vertical, d'un réfrigérant, d'un thermomètre et d'un septum, 0.36 g de composition catalytique hétérogène contenant 3% de Pt sur support charbon noir type 7075 de la société Engelhard (100 ppm de Pt) 100 g de tetrahydropyrane et 100 g (119.4 meq) d'huile de formule (XI) ont été introduits sous argon.

Ce mélange est chauffé à 86°C. Puis on coule sur une durée de 3h, 8.4 g (59.7 mmol, b'=3,5) d'anhydride d'acide allylsuccinique.

En fin de coulée on ajoute 100 ppm de la composition catalytique. Après 6 h le taux de transformation est de 33%. Après 24 h le taux de transformation en ≡SiH est de 48.6%.

On récupère l'huile fonctionnalisée après dévolatilisation à 120°C pendant 3 h.

La coloration de l'huile est de 12 hazen et la teneur en platine est de 0.11 ppm.

### Exemple 5

Dans un tricol de 500 ml équipé d'un agitateur vertical, d'un réfrigérant, d'un thermomètre et d'un septum, 0.32 g de composition catalytique hétérogène contenant 3% de Pt sur support charbon noir type 7075 de la société Engelhard (100 ppm de Pt) et 100 g (119.4 meq) d'huile de formule (XI) ont été introduits sous argon.

Ce mélange est chauffé à 90°C. Puis, on coule sur une durée de 3 h, 11.1 g (59.7 mmol, b"= 3,5) d'allyloxypipéridine.

Après la coulée le taux de transformation est de 40.8%. Après 2 h de plus le taux de transformation en ≡SiH est de 50.4%.

On récupère l'huile fonctionnalisée après dévolatilisation à 140°C sous "stripping" à l'air chaud pendant 3 h (vide : 1,33 10² Pa).

La coloration de l'huile est de 24 hazen et la teneur en platine est de 0.09 ppm.

### Exemple 6

Dans un tricol d'un litre équipé d'un agitateur vertical, d'un réfrigérant, d'un thermomètre et d'un septum, 0.283 g de composition catalytique hétérogène contenant 2,5% de Pt sur support charbon noir CECA 2S de la société CECA (10 ppm de Pt) et 500 g (3.62 eq) d'huile de formule (XII) ont été introduits sous argon.

Ce mélange est chauffé à 120°C. Puis, on coule sur une durée d'1 h, 11.1 g (59.7 mmol, b"= 1,25) de 1,2-époxy-4-vinyl-cyclohexane.

Après la coulée le taux de transformation est de 47.6%. Après 2 h de plus le taux de transformation en ≡SiH est de 49.3%.

On récupère l'huile fonctionnalisée après filtration et dévolatilisation à 120°C sous vide de 1,33 10² Pa pendant 3 h.

La coloration de l'huile est de 18 hazen et la teneur en platine est de 0.12 ppm.

Le rapport taux d'époxy dosé / taux d'époxy théorique est de 0,98.

## Revendications

1. Procédé de préparation d'huile silicone stable contenant des groupes ≡SiH et d'autres fonctions à partir d'une première huile silicone contenant des groupes ≡SiH, et des monomères définies ci-après et en présence d'une quantité de 5 à 5000 ppm de composition catalytique hétérogène par rapport à la masse totale des réactifs, **caractérisé en ce qu'**il comprend les étapes suivantes :
(a) la composition catalytique hétérogène est introduite dans le milieu réactionnel,
(b) la première huile silicone est introduite dans le milieu réactionnel,
(c) ledit milieu réactionnel est chauffé à une température comprise entre 25°C et 200°C,
(d) les monomères sont ensuite introduits sur une durée comprise entre 0 et 24 h, le rapport molaire monomère/≡SiH de ladite huile étant compris entre 0,0001 et 1,
(e) en option, l'huile silicone obtenue est ensuite séparée de la composition catalytique hétérogène par exemple par filtration , et
(f) l'huile silicone est finalement dévolatilisée;
et les monomères étant selon les formules suivantes (I), (II), (III), (IV), (V) et (VI) définis ci-dessous :
■ (1) 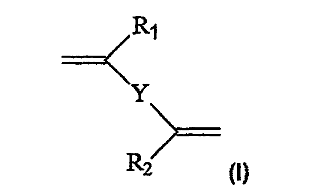 dans laquelle :
- les symboles R₁ et R₂, identiques et/ou différents, correspondent à un atome d'hydrogène et/ou un radical hydrocarboné monovalent choisi parmi le radical phényle et les radicaux alkyles linéaires ou ramifiés ayant de 1 à 12 atomes de carbone, -le symbole Y correspond à Y'-Y"-Y' où :
˙ le symbole Y" correspond à un radical divalent choisi parmi -(C=0)-, -(NH)-, -O-,-(C=O)-O-, -NH-(C=O)-, et une valence libre,
˙ les symboles Y', identiques et/ou différents, correspondent à un radical hydrocarboné divalent choisi parmi les radicaux alkyles linéaires ou ramifiés ayant de 1 à 6 atomes de carbone, et une valence libre, l'un des radicaux Y' pouvant être un radical phényle ou un radical alkylaryle dont la partie alkyle linéaire ou ramifiée comprend 1 à 6 atomes de carbone.
■ (2) 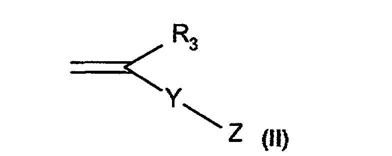 dans laquelle :
- le symbole Z correspond à un radical monovalent -NHR₄ ou OH,
- les symboles R₃ et R₄, identiques et/ou différents, correspondent à un atome d'hydrogène et/ou un radical hydrocarboné monovalent choisi parmi le radical phényle et les radicaux alkyles linéaires ou ramifiés ayant de 1 à 12 atomes de carbone;
- le symbole Y correspond à Y'-Y"-Y' où :
˙ le symbole Y" correspond à un radical divalent choisi parmi -(C=0)-, -(NH)-, - O-, -(C=O)-O-, -NH-(C=O)-, et une valence libre,
˙ les symboles Y', identiques et/ou différents, correspondent à un radical hydrocarboné divalent choisi parmi les radicaux alkyles linéaires ou ramifiés ayant de 1 à 6 atomes de carbone, et une valence libre, l'un des radicaux Y' pouvant être un radical phényle ou un radical alkylaryle dont la partie alkyle linéaire ou ramifiée comprend 1 à 6 atomes de carbone,
■ (3) 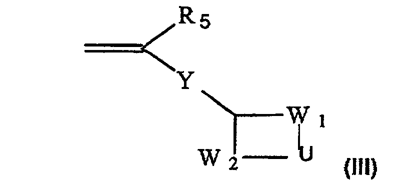 dans laquelle :
- le symbole U correspond à un radical divalent choisi parmi -NH-, -(C=O)-, -(C=O)-NH-et -(C=O)-O-(C=O)-,
- le symbole R₅ correspond à un atome d'hydrogène et/ou un radical hydrocarboné monovalent choisi parmi le radical phényle et les radicaux alkyles linéaires ou ramifiés ayant de 1 à 12 atomes de carbone;
- les symboles W₁ et W₂, identiques et/ou différents, correspondent à un radical hydrocarboné divalent choisi parmi le radical phényle, les radicaux alkyles linéaires ou ramifiés ayant de 1 à 12 atomes de carbone, les radicaux alkylarytes dont la partie alkyle linéaire ou ramifiée comprend 1 à 6 atomes de carbone, et une valence libre,
- le symbole Y correspond à Y'-Y"-Y' où :
˙ le symbole Y" correspond à un radical divalent choisi parmi -(C=0)-, -(NH)-, -O-,-(C=O)-O-, -NH-(C=O)-, et une valence libre,
˙ les symboles Y', identiques et/ou différents, correspondent à un radical hydrocarboné divalent choisi parmi les radicaux alkyles linéaires ou ramifiés ayant de 1 à 6 atomes de carbone, et une valence libre, l'un des radicaux Y' pouvant être un radical phényle ou un radical alkylaryle dont la partie alkyle linéaire ou ramifiée comprend 1 à 6 atomes de carbone;
■ et (4)

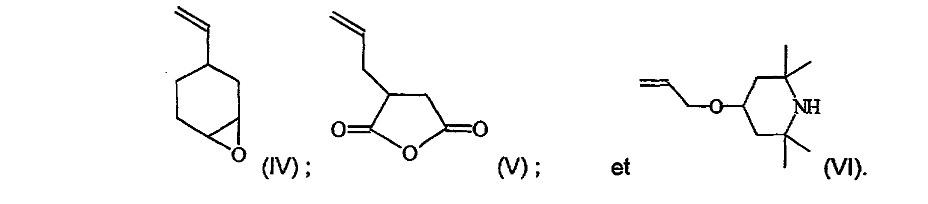

2. Procédé de préparation selon la revendication 1, **caractérisé en ce que** les monomères sont identiques.

3. Procédé de préparation selon l'une quelconque des revendications 1 à 2, **caractérisé en ce que** la composition catalytique hétérogène comprend un métal choisi parmi le groupe constitué de cobalt, rhodium, ruthénium, platine et nickel déposé sur un support inerte, le métal étant de préférence le platine.

4. Procédé de préparation selon la revendication 3, **caractérisé en ce que** le support inerte est sélectionné parmi le groupe constitué de noir de carbone, charbon, alumine, silice, silicate et sulfate de baryum, le support inerte étant de préférence le noir de carbone.

5. Procédé de préparation selon l'une quelconque des revendications 3 ou 4, **caractérisé en ce que** la quantité de métal est comprise entre 0,1% et 5% par rapport au poids du support inerte.

6. Procédé de préparation selon l'une quelconque des revendications précédentes, **caractérisé en ce que** la quantité de métal de la composition catalytique est comprise entre 1 et 1000 ppm par rapport au poids de l'huile silicone.

7. Procédé de préparation d'huile silicone stable contenant des groupes ≡SiH et d'autres fonctions selon l'une quelconque des revendications précédentes, **caractérisé en ce que** la première huile silicone est linéaire ou cyclique et de formule(s) moyenne(s) (VII) et/ou (VIII) : 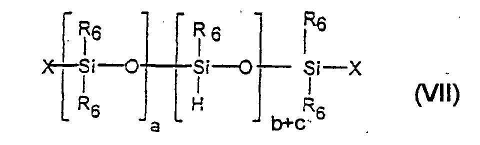 et/ou) 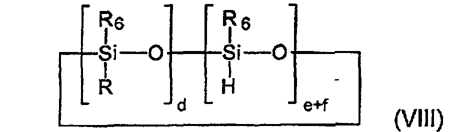 dans lesquelles :
■ les symboles R₆ sont identiques ou différents et correspondent à un radical hydrocarboné monovalent choisi parmi le radical phényle et les radicaux alkyles linéaire ou ramifié ayant de 1 à 6 atomes de carbone ;
■ les symboles X sont identiques ou différents et correspondent à un radical monovalent choisi parmi R₆, un atome d'hydrogène, un radical méthoxy, et un radical éthoxy ;
■ a, b et c sont des nombres entiers ou fractionnaires tels que :
- 0 < a ≤ 1000, de préférence 0 < a ≤ 100,
- 0 ≤ b+c ≤ 200, de préférence 1 < b+c ≤ 100, et au moins un des deux X correspondant au radical hydrogène si b+c = 0,
- 1 < a+b+c ≤ 1000, de préférence 1 < a+b+c ≤ 100 ;
■ d, e et f sont des nombres entiers ou fractionnaires, tels que :
- 0 < d < 10, de préférence 0 < d < 5
- 1 < e+f < 10, de préférence 1 < e+f < 5.

8. Procédé de préparation selon l'une quelconque des revendications précédentes, **caractérisé en ce que** l'huile silicone et le monomère passent sur ou à travers un lit fixe de la composition catalytique.

9. Huile silicone stable contenant des groupes ≡SiH et d'autres fonctions, susceptible d'être obtenue par le procédé selon l'une quelconque des revendications 1 à 8.

10. Huile silicone stable selon la revendication 9, **caractérisée en ce qu'**au moins une des fonctions de l'huile silicone contient un époxyde.

11. Huile silicone stable selon la revendication 9, **caractérisée en ce qu'**au moins une des fonctions de l'huile silicone est une amine à encombrement stérique.

12. Utilisation des huiles silicones stables selon l'une quelconque des revendications 9 à 11 dans la préparation de produits anti-adhérents pour papier, verre ou plastique.

13. Utilisation des huiles silicones stables susceptibles d'être obtenues par le procédé selon l'une quelconque des revendications 1 à 8 pour la préparation de produits anti-adhérents pour papier, verre ou plastique.

## Claims

1. Process for preparing a stable silicone oil containing ≡SiH groups and other functions, starting with a first silicone oil containing ≡SiH groups and monomers defined hereinbelow and in the presence of an amount of from 5 to 5000 ppm of heterogeneous catalytic composition relative to the total mass of the reagents, **characterized in that** this process comprises the following steps:
(a) the heterogeneous catalytic composition is introduced into the reaction medium,
(b) the first silicone oil is introduced into the reaction medium,
(c) the said reaction medium is heated to a temperature of between 25°C and 200°C,
(d) the monomers are then introduced over a period of between 0 and 24 h, the monomer/≡SiH molar ratio of the said oil being between 0.0001 and 1,
(e) optionally, the silicone oil obtained is then separated from the heterogeneous catalytic composition, for example by filtration, and
(f) the silicone oil is finally devolatilized;
and the monomers being of the following formulae (I), (II), (III), (IV), (V) and (VI) defined below:
■ (1) 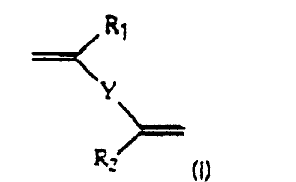 in which:
- the symbols R₁ and R₂, which may be identical and/or different, correspond to a hydrogen atom and/or a monovalent hydrocarbon-based radical chosen from a phenyl radical and linear or branched alkyl radicals containing from 1 to 12 carbon atoms,
- the symbol Y corresponds to Y'-Y"-Y' in which:
˙ Y" corresponds to a divalent radical chosen from - (C=0) -, -(NH)-, -O-, -(C=O)-O-, -NH-(C=O)- and a free valency,
˙ the symbols Y', which may be identical and/or different, correspond to a divalent hydrocarbon-based radical chosen from linear or branched alkyl radicals containing from 1 to 6 carbon atoms and a free valency, it being possible for one of the radicals Y' to be a phenyl radical or an alkylaryl radical in which the linear or branched alkyl part comprises 1 to 6 carbon atoms.
■ (2) 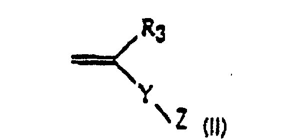 in which:
- the symbol Z corresponds to a monovalent radical -NHR₄ or OH,
- the symbols R₃ and R₄, which may be identical and/or different, correspond to a hydrogen atom and/or a monovalent hydrocarbon-based radical chosen from a phenyl radical and linear or branched alkyl radicals containing from 1 to 12 carbon atoms;
- the symbol Y corresponds to Y'-Y"-Y', in which:
· the symbol Y" corresponds to a divalent radical chosen from -(C=O)-, -(NH)-, -O, -(C=O)-O-, -NH-(C=O)- and a free valency,
· the symbols Y', which may be identical and/or different, correspond to a divalent hydrocarbon-based radical chosen from linear or branched alkyl radicals containing from 1 to 6 carbon atoms, and a free valency, it being possible for one of the radicals Y' to be a phenyl radical or an alkylaryl radical in which the linear or branched alkyl part comprises 1 to 6 carbon atoms,
■ (3) 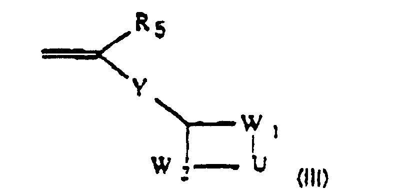 in which:
- the symbol U corresponds to a divalent radical chosen from -NH-, -(C=O)-, -(C=O)-NH- and -(C=O)-O-(C=O)-,
- the symbol R₅ corresponds to a hydrogen atom and/or a monovalent hydrocarbon-based radical chosen from a phenyl radical and linear or branched alkyl radicals containing from 1 to 12 carbon atoms;
- the symbols W₁ and W₂, which may be identical or different, correspond a divalent hydrocarbon-based radical chosen from a phenyl radical and linear or branched alkyl radicals containing from 1 to 12 carbon atoms, alkylaryl radicals in which the linear or branched alkyl part comprises 1 to 6 carbon atoms, and a free valency,
- the symbol Y corresponds to Y'-Y"-Y', in which:
· the symbol Y" corresponds to a divalent radical chosen from -(C=O)-, -(NH)-, -O-, -(C=O)-O-, -NH-(C=O)-, and a free valency,
· the symbols Y', which may be identical and/or different, correspond to a divalent hydrocarbon-based radical chosen from linear or branched alkyl radicals containing from 1 to 6 carbon atoms, and a free valency, it being possible for one of the radicals Y' to be a phenyl radical or an alkylaryl radical in which the linear or branched alkyl part comprises 1 to 6 carbon atoms;
■ and (4)

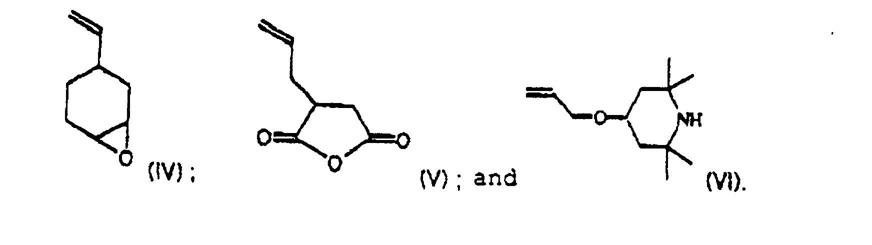

2. Preparation process according to Claim 1, **characterized in that** the monomers are identical.

3. Preparation process according to either of Claims 1 and 2, **characterized in that** the heterogeneous catalytic composition comprises metal chosen from the group consisting of cobalt, rhodium, ruthenium, platinum and nickel, deposited on an inert support, the metal preferably being platinum.

4. Preparation process according to Claim 3, **characterized in that** the inert support is selected from the group consisting of carbon black, charcoal, alumina, silica, barium silicate and barium sulfate, the inert support preferably being carbon black.

5. Preparation process according to either of Claims 3 and 4, **characterized in that** the amount of metal is between 0.1% and 5% relative to the weight of the inert support.

6. Preparation process according to any one of the preceding claims, **characterized in that** the amount of metal in the catalytic composition is between 1 and 1000 ppm relative to the weight of the silicone oil.

7. Process for preparing a stable silicone oil containing ≡SiH groups and other functions according to any one of the preceding claims, **characterized in that** the first silicone oil is linear or cyclic and of average formula(e) (VII) and/or (VIII): 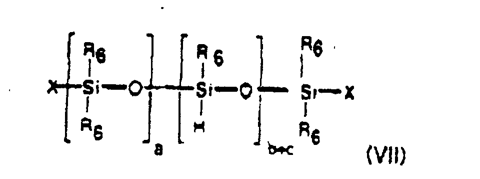 and/or 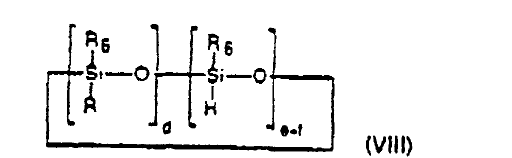 in which:
■ the symbols R₆ are identical or different and correspond to a monovalent hydrocarbon-based radical chosen from a phenyl radical and linear or branched alkyl radicals containing from 1 to 6 carbon atoms;
■ the symbols X are identical or different and correspond to a monovalent radical chosen from R₆, a hydrogen atom, a methoxy radical and an ethoxy radical;
■ a, b and c are integers or fractions such that;
- 0 < a ≤ 1000, preferably 0 < 1 ≤ 100,
- 0 ≤ b + c ≤ 200, preferably 1 < b+c ≤ 100, and at least one of the two groups X corresponds to a hydrogen radical if b + c = 0,
- 1 < a+b+c ≤ 1000, preferably 1 < a+b+c ≤ 100;
■ d, e and f are integers or fractions such that:
- 0 < d < 10, preferably 0 < d < 5
- 1 < e+f < 10, preferably 1 < e+f < 5.

8. Preparation process according to any one of the preceding claims, **characterized in that** the silicone oil and the monomer pass over or through a fixed bed of the catalytic composition.

9. Stable silicone oil containing ≡SiH groups and other functions, which can be obtained by the process according to any one of Claims 1 to 8.

10. Stable silicone oil according to Claim 9, **characterized in that** at least one of the functions in the silicone oil contains an epoxide.

11. Stable silicone oil according to Claim 9, **characterized in that** at least one of the functions in the silicone oil is a sterically hindered amine.

12. Use of the stable silicone oils according to any one of Claims 9 to 11, in the preparation of anti-adhesive products for paper, glass or plastic.

13. Use of the stable silicone oils which can be obtained by the process according to any one of Claims 1 to 8, for the preparation of anti-adhesive products for paper, glass or plastic.

## Patentansprüche

1. Verfahren zur Herstellung von stabilem Siliconöl, das ≡SiH-Gruppen und weitere Funktionen enthält, aus einem ersten Siliconöl, das ≡SiH-Gruppen enthält, und Monomeren, die im Folgenden definiert sind, und in Gegenwart einer Menge von 5 bis 5000 ppm heterogener katalytischer Zusammensetzung, bezogen auf die Gesamtmasse der Reaktanten, **dadurch gekennzeichnet, dass** es die folgenden Schritte umfasst:
(a) die heterogene katalytische Zusammensetzung wird in das Reaktionsmedium eingeführt,
(b) das erste Siliconöl wird in das Reaktionsmedium eingeführt,
(c) besagtes Reaktionsmedium wird auf eine Temperatur zwischen 25°C und 200°C erhitzt,
(d) die Monomere werden dann über eine Dauer von 0 bis 24 h eingeführt, wobei das Molverhältnis Monomer / ≡SiH besagten Öls zwischen 0,0001 und 1 liegt,
(e) wahlweise wird das erhaltene Siliconöl dann von der heterogenen katalytischen Zusammensetzung beispielsweise durch Filtration abgetrennt und
(f) das Siliconöl wird schließlich entgast;
und wobei die Monomere den unten definierten folgenden Formeln (I), (II), (III), (IV), (V) und (VI) entsprechen:
• (1) 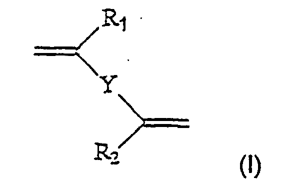 worin:
- die Symbole R₁ und R₂, die gleich und/oder verschieden sind, einem Wasserstoffatom und/oder einem einwertigen Kohlenwasserstoffrest entsprechen, der ausgewählt ist unter dem Phenylrest und den linearen oder verzweigten Alkylresten mit 1 bis 12 Kohlenstoffatomen,
- das Symbol Y Y'-Y"-Y' entspricht, worin:
˙ das Symbol Y" einem zweiwertigen Rest entspricht, der ausgewählt ist unter -(C=O)-, -(NH)-, -O-, -(C=O)-O-, -NH-(C=O)- und einer freien Valenz,
˙ die Symbole Y', die gleich und/oder verschieden sind, einem zweiwertigen Kohlenwasserstoffrest entsprechen, der ausgewählt ist unter den linearen oder verzweigten Alkylresten mit 1 bis 6 Kohlenstoffatomen und einer freien Valenz, wobei einer der Reste Y' ein Phenylrest oder ein Alkylarylrest, dessen linearer oder verzweigter Atkylteil 1 bis 6 Kohlenstoffatome umfasst, sein kann,
• (2) 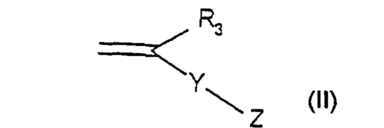 worin:
- das Symbol Z einem einwertigen Rest -NHR₄ oder OH entspricht,
- die Symbole R₃ und R₄, die gleich und/oder verschieden sind, einem Wasserstoffatom und/oder einem einwertigen Kohlenwasserstoffrest entsprechen, der ausgewählt ist unter dem Phenylrest und den linearen oder verzweigten Alkylresten mit 1 bis 12 Kohlenstoffatomen,
- das Symbol Y Y-Y"-Y' entspricht, worin:
· das Symbol Y" einem zweiwertigen Rest entspricht, der ausgewählt ist unter -(C=O)-, -(NH)-, -O-, -(C=O)-O-, -NH-(C=O)- und einer freien Valenz,
· die Symbole Y', die gleich und/oder verschieden sind, einem zweiwertigen Kohlenwasserstoffrest entsprechen, der ausgewählt ist unter den linearen oder verzweigten Alkylresten mit 1 bis 6 Kohlenstoffatomen und einer freien Valenz, wobei einer der Reste Y' ein Phenylrest oder ein Alkylarylrest, dessen linearer oder verzweigter Alkylteil 1 bis 6 Köhlenstoffatome umfasst, sein kann,
• (3) 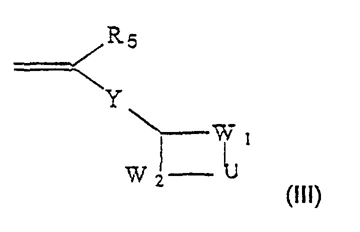 worin:
- das Symbol U einem zweiwertigen Rest entspricht, der ausgewählt ist unter -(NH)-, -(C=O)-, -(C=O)-NH- und -(C=O)-O-(C=O)-,
- das Symbol R₅ einem Wasserstoffatom und/oder einem einwertigen Kohlenwasserstoffrest entspricht, der ausgewählt ist unter dem Phenylrest und den linearen oder verzweigten Alkylresten mit 1 bis 12 Kohlen stoffatomen,
- die Symbole W₁ und W₂, die gleich und/oder verschieden sind, einem zweiwertigen Kohlenwasserstoffrest entsprechen, der ausgewählt ist unter dem Phenylrest, den linearen oder verzweigten Alkylresten mit 1 bis 12 Kohlenstoffatomen, den Alkylaryfresten, deren linearer oder verzweigter Alkylteil 1 bis 6 Kohlenstoffatome umfasst, und einer freien Valenz,
- das Symbol Y Y'-Y"-Y' entspricht, worin:
· das Symbol Y" einem zweiwertigen Rest entspricht, der ausgewählt ist unter -(C=O)-, -(NH)-, -O-, -(C=O)-O-, -NH-(C=O)- und einer freien Valenz,
· die Symbole Y', die gleich und/oder verschieden sind, einem zweiwertigen Kohlenwasserstoffrest entsprechen, der ausgewählt ist unter den linearen oder verzweigten Alkylresten mit 1 bis 6 Kohlenstoffatomen und einer freien Valenz, wobei einer der Reste Y' ein Phenylrest oder ein Alkylarylrest, dessen linearer oder verzweigter Alkylteil 1 bis 6 Kohlenstoffatome umfasst, sein kann,
• und (4)

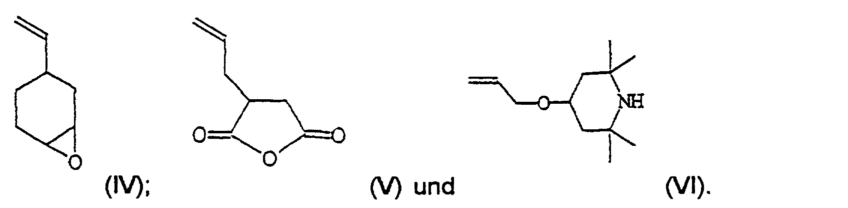

2. Herstellungsverfahren gemäß Anspruch 1, **dadurch gekennzeichnet, dass** die Monomere gleich sind.

3. Herstellungsverfahren gemäß einem der Ansprüche 1 bis 2, **dadurch gekennzeichnet, dass** die heterogene katalytische Zusammensetzung ein Metall umfasst, das ausgewählt ist aus der Gruppe, die aus Köbalt, Rhodium, Ruthenium, Platin und Nickel besteht, abgeschieden auf einem inerten Träger, wobei das Metall vorzugsweise Platin ist.

4. Herstellungsverfahren gemäß Anspruch 3, **dadurch gekennzeichnet, dass** der inerte Träger ausgewählt ist aus der Gruppe, die aus Ruß, Kohle, Aluminiumoxid, Siliciumdioxid, Bariumsilikat und -sultat besteht, wobei der inerte Träger vortagsweise Ruß ist.

5. Herstellungsverfahren gemäß einem der Ansprüche 3 oder 4, **dadurch gekennzeichnet, dass** die Menge an Metall zwischen 0,1% und 5% liegt, bezogen auf das Gewicht des inerten Trägers.

6. Herstellungsverfahren gemäß einem der vorhergehenden Ansprüche, **dadurch gekennzeichnet, dass** die Menge an Metall der katalytischen Zusammensetzung zwischen 1 und 1000 ppm liegt, bezogen auf das Gewicht des Siliconöls.

7. Verfahren zur Herstellung von stabilem Siliconöl, das ≡SiH-Gruppen und weitere Funktionen enthält, gemäß einem der vorhergehenden Ansprüche, **dadurch gekennzeichnet, dass** das erste Siliconöl linear oder cyclisch ist und die mittlere(n) Formel(n) (VII) und/oder (VIII): 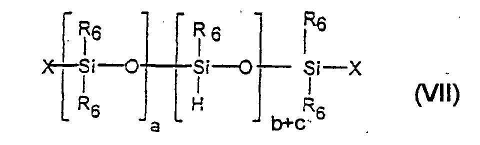 und/oder 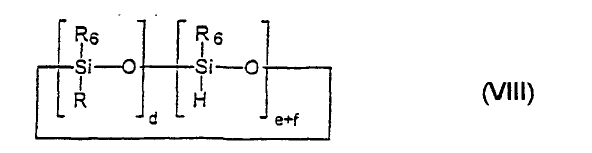 nat, worin:
• die Symbole R₆ gleich oder verschieden sind und einem einwertigen Kohlenwasserstoffrest entsprechen, der ausgewählt ist unter dem Phenylrest und den linearen oder verzweigten Alkylresten mit 1 bis 6 Kohlenstoffatomen;
• die Symbole X gleich oder verschieden sind und einem einwertigen Rest entsprechen, der unter R₆, einem Wasserstoffatom, einem Methoxyrest und einem Ethoxyrest ausgewählt ist;
• a, b und c ganze Zahlen oder Brüche sind, so dass:
- 0 < a ≤ 1000, vorzugsweise 0 < a ≤ 100,
- 0 ≤ b+c ≤ 200, vorzugsweise 1 < b+c ≤ 100, und wenigstens eines der beiden X dem Wasserstoffrest entspricht, wenn b+c = 0,
- 1 < a+b+c ≤ 1000, vorzugsweise 1 < a+b+c ≤ 100;
• d, e und f ganze Zahlen oder Brüche sind, so dass:
- 0 < d < 10, vorzugsweise 0 < d < 5
- 1 < e+f < 10, vorzugsweise 1 < e+f < 5.

8. Herstellungsverfahren gemäß einem der vorhergehenden Ansprüche, **dadurch gekennzeichnet, dass** das Siliconöl und das Monomer über oder durch ein Festbett der katalytischen Zusammensetzung strömen.

9. Stabiles Siliconöl, das ≡SiH-Gruppen und weitere Funktionen enthält, das durch das Verfahren gemäß einem der Ansprüche 1 bis 8 erhalten werden kann.

10. Stabiles Siliconöl gemäß Anspruch 9, **dadurch gekennzeichnet, dass** wenigstens eine der Funktionen des Siliconöls ein Epoxid enthält.

11. Stabiles Siliconöl gemäß Anspruch 9, **dadurch gekennzeichnet, dass** wenigstens eine der Funktionen des Siliconöls ein Amin mit sterischer Hinderung ist.

12. Verwendung der stabilen Siliconöle gemäß einem der Ansprüche 9 bis 11 bei der Herstellung von Antihaftprodukten für Papier, Glas oder Kunststoff.

13. Verwendung der stabilen Siliconöle, die durch das Verfahren gemäß einem der Ansprüche 1 bis 8 erhalten werden können, für die Herstellung von Antihaftprodukten für Papier, Glas oder Kunststoff.
